Europäisches Patentamt

European Patent Office

Office européen des brevets

(11) Veröffentlichungsnummer: **0 446 575 A2**

# (12) EUROPÄISCHE PATENTANMELDUNG

(21) Anmeldenummer: 91100498.4

(51) Int. Cl.5: **H02B 1/044**

(22) Anmeldetag: 17.01.91

(30) Priorität: 13.03.90 DE 9003083 U

(43) Veröffentlichungstag der Anmeldung:
18.09.91 Patentblatt 91/38

(84) Benannte Vertragsstaaten:
AT BE CH DE DK ES FR GB GR IT LI LU NL SE

(71) Anmelder: KRONE Aktiengesellschaft
Beeskowdamm 3-11
W-1000 Berlin 37(DE)

(72) Erfinder: Biederstadt, Lutz
Schweitzerstrasse 1A
W-1000 Berlin 37(DE)

(54) Montageplatte, insbesondere für Gehäuse der Fernmelde- und Datentechnik.

(57) Die Erfindung bezieht sich auf eine Montageplatte (1) zur Aufnahme von Funktionselementen (8). Um einen leichten Austausch von unterschiedlichen Funktionselementen (8) zu ermöglichen, ist die Montageplatte mit Ausschnitten (2) versehen, in die Tragelemente (5,25) einsetzbar sind. Die Tragelemente (5,25) nehmen die verschiedenen Funktionselemente (8) mit unterschiedlichen Abmessungen auf.

EP 0 446 575 A2

Die Erfindung bezieht sich auf eine Montageplatte zur Aufnahme von Funktionselementen, insbesondere für Gehäuse der Fernmelde- und Datentechnik.

Montageplatten bzw. Frontplatten für Gehäuse der Fernmelde- und Datentechnik sind in den verschiedensten Ausführungsformen bekannt. Bei diesen Frontplatten sind zur Aufnahme von verschiedenen Funktionselementen - wie z.B. Koaxbuchsen, LWL-Buchsen - in der Frontplatte entsprechende Aufnahmeöffnungen vorgesehen, die dem jeweiligen Funktionselement bezüglich den äußeren Abmessungen angepaßt sind. Nachteilig bei diesen Montageplatten ist, daß beim Wechsel von einem Funktionselement zu einem Funktionselement unterschiedlicher Abmessung die gesamte Montageplatte des Gehäuses ausgewechselt werden muß.

Der Erfindung liegt von daher die Aufgabe zugrunde, eine Montageplatte, insbesondere für Gehäuse der Fernmelde- und Datentechnik, der gattungsgemäßen Art zu schaffen, bei der Funktionselemente, insbesondere Steckbuchsen, mit unterschiedlichen Abmessungen beliebig in der Montageplatte befestigt werden können. Es soll ein Austausch von Funktionselementen verschiedener Größen problemlos möglich sein.

Die Lösung dieser Aufgabe ergibt sich aus den kennzeichnenden Merkmalen des Patentanspruches 1. Die Montageplatte ist mit Ausschnitten versehen, in die Tragelemente einsetzbar sind. Hierdurch können Tragelemente, die Funktionselemente mit unterschiedlichen Abmessungen aufnehmen, beliebig in die Ausschnitte eingesetzt und verrastet werden. Soll ein Funktionselement mit einem anderen Funktionselement unterschiedlicher Abmessung ausgetauscht werden, so wird in einfachster Weise das Tragelement mit dem ersten Funktionselement gegen ein Tragelement mit einem zweiten Funktionselement ausgewechselt.

Weitere vorteilhafte Ausgestaltungen der Erfindung sind in den Unteransprüchen gekennzeichnet. Hingewiesen wird insbesondere auf die Ausführungsform gemäß Anspruch 2, die es ermöglicht, die Tragelemente seitlich in einfachster Weise in die Montageplatte einzuschieben.

Die Erfindung ist nachfolgend anhand zweier in den Zeichnungen dargestellten Ausführungsbeispiele näher erläutert. Es zeigen

Fig. 1     die Draufsicht auf die Montageplatte einer ersten Ausführungsform,

Fig. 2     die Draufsicht und die Seitenansicht eines ersten Tragelementes,

Fig. 3     die Draufsicht auf die Montageplatte und auf das eingesetzte Tragelement,

Fig. 4     eine perspektivische Darstellung eines Tragelementes einer zweiten Ausführungsform und

Fig. 5     die Rückansicht der Darstellung nach Fig. 4.

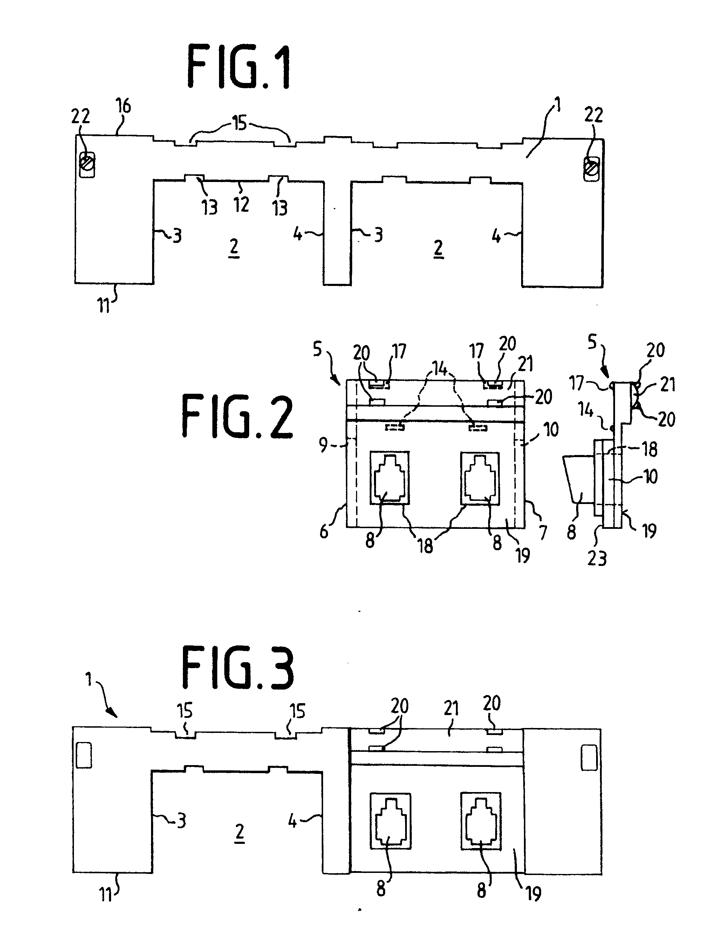

Die in in Fig. 1 dargestellte Montageplatte 1 besteht im wesentlichen aus einer rechteckförmigen metallischen Platte, die auch aus einem Kunststoff hergestellt sein kann. Im ersten Ausführungsbeispiel sind zwei rechteckförmige Ausschnitte 2 vorgesehen. Jeder Ausschnitt 2 besteht aus einer Freimachung, die bis zu einer Seitenfläche 11 der Montageplatte 1 reicht, wodurch der Ausschnitt 2 zu dieser Seitenfläche 11 offen ist. Die Schmalseiten 3,4 des Ausschnittes 2 dienen als Führung und werden in Führungsnuten 9,10 eines Tragelementes 5 aufgenommen, wie es später noch näher erläutert werden wird. Die Längsseite 12 ist mit Freimachungen 13 versehen, in die Rastelemente 14 des Tragelementes 5 einrasten. Darüber hinaus besitzt die Montageplatte 1 Freimachungen 15 an der äußeren Längsseite 16, in die ebenfalls Rastelemente 17 des Tragelementes 5 einrasten, wie es später noch erläutert werden wird.

In Fig. 2 ist das Tragelement 5 dargestellt, welches aus einem rechteckförmigen, metallischen Plattenkörper, bzw. aus einem aus Kunststoff hergestellten Plattenkörper besteht und eine der Innenkontur des Ausschnittes 2 entsprechend angepaßte Außenkontur aufweist. Innerhalb des Tragelementes 5 sind Freimachungen 18 vorgesehen, in die Steckbuchsen 8 eingerastet sind. An den Schmalseiten 6,7 des Tragelementes 5 sind Führungsnuten 9 und 10 vorgesehen. An der Unterseite 23 des Tragelementes 5 sind Rastelemente 14 und 17 angeordnet. Auf der Oberseite 19 sind des weiteren Halteklammern 20 angeordnet, die ein Bezeichnungsschild 21 befestigen.

In Fig. 3 ist das Tragelement 5 in die Montageplatte 1 eingeführt. Hierbei greifen die Schmalseiten 3 und 4 des Ausschnittes 2 der Montageplatte 1 in die Führungsnuten 9,10 des Tragelementes 5 ein. In der Endposition rasten die Rastelemente 14 des Tragelementes 5 in die Freimachungen 13 der Montageplatte 1 und die Rastelemente 17 des Tragelementes in die Freimachung 15 der Montageplatte 1 ein, so daß das Tragelement 5 fest mit der Montageplatte 1 verrastet ist. Ein Entfernen des Tragelementes 5 ist durch Entriegeln der Rastelemente 17 möglich.

Die Montageplatte 1 ist an einem nicht dargestellten Gestell bzw. an einem Gehäusekörper über Schrauben 22 montierbar. Sollte anstelle der Steckbuchse 8 ein anderes Funktionselement, z.B. eine Koaxbuchse benötigt werden, so wird ein entsprechendes Tragelement 5, bei welchem die Koaxbuchse bereits befestigt ist, in den Ausschnitt 2 der Montageplatte 1 eingesetzt.

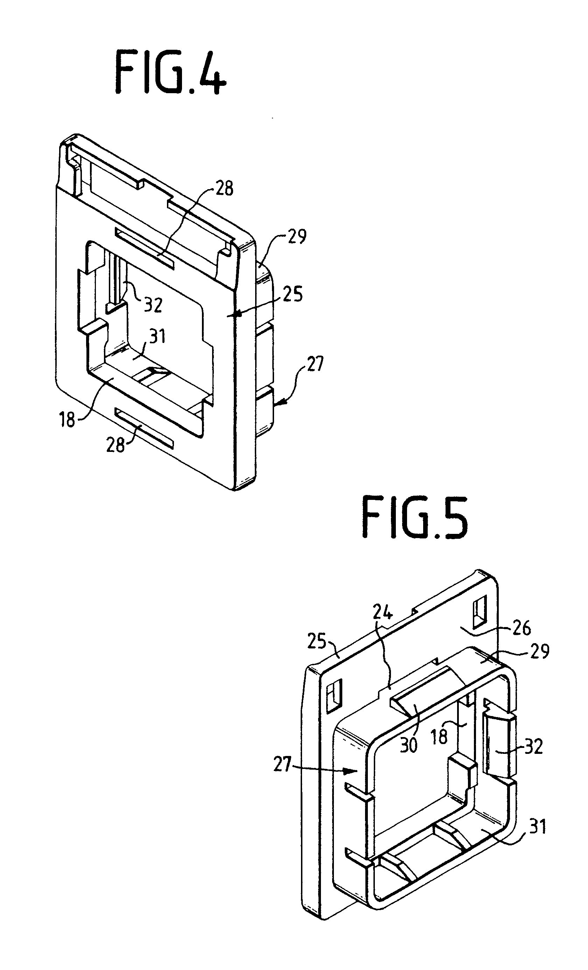

In Fig. 4 ist eine zweite Ausführungsform eines Tragelementes 25 dargestellt. Dieses Tragelement 25 besteht aus einem quadratischen Gehäusekörper, in dessen Mitte eine Freimachung 18 vorgesehen ist. In die Freimachung 18 wird das nicht dargestellte Funktionselement 8 eingesetzt, welches z.B. aus einer Koaxbuchse, einer LWL-Buchse oder einem anderen Funktionselement 8 bestehen kann. An der Innenseite 31 des Halterahmens 27 sind zwei Rastsegmente 32 angeordnet, die die eingesetzten Funktionselemente 8 klemmend halten.

Wie in Fig. 5 dargestellt ist, weist das Tragelement 25 an der Rückseite 26 einen Halterahmen 27 auf. Dieser Halterahmen 27 ist über Klemmstege 24, die in Öffnungen 28 des Tragelementes 25 einrasten, mit dem Tragelement 25 verbunden. Der Halterahmen 27 besitzt an der Außenseite 29 zwei nach außen gerichtete Rastsegmente 30, die die nicht dargestellte Montageplatte 1 beim Einsetzen des Tragelementes 25 hintergreifen und somit das Tragelement 26 an der Montageplatte 1 befestigen. Die Montageplatte 1 ist hierbei mit einem Ausschnitt 2 versehen, der eine dem Halterahmen 27 entsprechende quadratische Form aufweist.

Mehrere dieser Tragelemnte 25 können somit in einer mit entsprechenden Ausschnitten 2 versehenen Montageplatte 1 angeordnet werden, wobei die Tragelemente 25 unterschiedliche Funktionselemente 8 aufnehmen können.

## BEZUGSZEICHENLISTE

| | |
|---|---|
| 1 | Montageplatte |
| 2 | Ausschnitte |
| 3,4 | Schmalseiten |
| 5 | Tragelement |
| 6,7 | Schmalseiten |
| 8 | Funktionselemente |
| 9,10 | Führungsnuten |
| 11 | Seitenfläche . |
| 12 | Längsseite |
| 13 | Freimachung |
| 14 | Rastelement |
| 15 | Freimachung |
| 16 | Längsseite |
| 17 | Rastelement |
| 18 | Freimachung |
| 19 | Oberseite |
| 20 | Halteklammern |
| 21 | Bezeichnungsschild |
| 22 | Schraube |
| 23 | Unterseite |
| 24 | Klemmstege |
| 25 | Tragelement |
| 26 | Rückseite |
| 27 | Halterahmen |
| 28 | Öffnungen |
| 29 | Außenseite |
| 30 | Rastsegmente |
| 31 | Innenseite |
| 32 | Rastsegmente |

**Patentansprüche**

1. Montageplatte zur Aufnahme von Funktionselementen, insbesondere für ein Gehäuse der Fernmelde- und Datentechnik,
**dadurch gekennzeichnet,**
daß die Montageplatte (1) mit Ausschnitten (2) versehen ist, in die Tragelemente (5/25) einsetzbar sind und
daß die Tragelemente (5) die Funktionselemente (8) aufnehmen.

2. Montageplatte nach Anspruch 1,
**dadurch gekennzeichnet,**
daß die Ausschnitte (2) zu einer Seitenfläche (11) der Montageplatte (1) offen sind, so daß die Tragelemente (5) seitlich in die Ausschnitte (2) einschiebbar sind.

3. Montageplatte nach Anspruch 1,
**dadurch gekennzeichnet,**
daß an den Schmalseiten (6,7) der Tragelemente (5) Führungsnuten (9,10) vorgesehen sind.

4. Montageplatte nach Anspruch 1,
**dadurch gekennzeichnet,**
daß Freimachungen (13,15) an der Montageplatte (1) vorgesehen sind, in die Rastelemente (14,17) des Tragelementes (5) einrasten.

5. Montageplatte nach Anspruch 1,
**dadurch gekennzeichnet,**
daß das Tragelement (25) an der Rückseite (26) einen Halterahmen (27) zur Befestigung mit der Montageplatte (1) aufweist.

# FIG.1

# FIG.2

# FIG.3

# FIG.4

# FIG.5